# EUROPEAN PATENT APPLICATION

(11) **EP 3 834 674 A1**
(43) Date of publication of application: **16.06.2021**
(21) Application number: 20153361.9
(22) Date of filing: 23.01.2020
(51) Int. Cl.: A47J 27/00, A47J 43/046, A47J 36/32

(54) **METHOD FOR PREPARING SOY MILK WITH A BLENDER AND THE BLENDER**

(30) Priority: 12.12.2019 CN 201911276002
(71) Applicant: Koninklijke Philips N.V., 5656 AG Eindhoven (NL)
(72) Inventor: TAN, Jingwei, 5656 AE Eindhoven (NL)
(74) Representative: Philips Intellectual Property & Standards

(57) **Abstract**

The present disclosure provide a method of preparing soy milk using a blender and the blender. The method comprises: heating beans and water in a predetermined proportion to a first predetermined temperature (210); cooking the beans at a second predetermined temperature such that the beans are well-cooked (220); and grinding the well-cooked beans (230). The method of preparing soy milk according to the present disclosure can solve the overflow problem that occurs in the preparation of the soy milk and provides delicious and nutritious soy milk.

## Description

### FIELD OF THE INVENTION

Embodiments of the present disclosure generally relate to a field of food preparation, and more specifically, to soy milk preparation.

### BACKGROUND OF THE INVENTION

Soy milk contains a lot of high-quality proteins, vitamins, amino acids and trace elements, and is thus an ideal healthy food with a high nutritional value. As food safety issues increase and awareness of green and healthy lifestyle is enhanced, more and more people prefer homemade soy milk due to considerations of hygiene and safety. Household soy milk machines are gaining more popularity in Asian countries. Demand for soy milk machines is promoting a rapid growth of the household soy milk machine market. In order to prepare soy milk at home, users need to purchase a soy milk machine. However, unwilling to add too many kitchen gadgets that occupy limited kitchen space, users will more likely own a single device with multiple functions. For example, if users use blenders frequently in daily life, it is expected that the blenders *per se* can be used to make the soy milk.

Therefore, there is a need for a method of preparing the soy milk implemented with a blender to satisfy the users' demand as mentioned above.

### SUMMARY OF THE INVENTION

Unlike conventional soy milk makers, a blender is typically not provided with an overflow sensor for sensing whether cooking soy milk overflows. Due to the absence of the overflow sensor, there is a problem that the soy milk is likely to overflow from the blender. In order to at least partially solve the above and other potential problems, the embodiments of the present disclosure provide a method of preparing soy milk using a blender and the blender.

In one aspect, embodiments of the present disclosure provide a method of preparing soy milk using a blender. The method comprises: heating beans and water in a predetermined proportion to a first predetermined temperature; cooking the beans at a second predetermined temperature to make the beans well-cooked; and grinding the well-cooked beans.

In general, the embodiments of the present disclosure provide a method of preparing soy milk featuring that cooking is performed first and then performing grinding. The improved soy milk preparation method at least efficiently eliminates the problem of soy milk overflow. Even though the blender is not provided with the overflow sensor, it can prevent the soy milk from overflowing from the blender.

In some embodiments, heating the beans and the water in the predetermined proportion to the first predetermined temperature is completed within a first time period; and cooking the beans at the second predetermined temperature to make the beans well-cooked is completed within a second time period.

In some embodiments, the second time period is set to be within a range from 10min to 30min.

In some embodiments, heating the beans and the water to the first predetermined temperature and cooking the beans at the second predetermined temperature such that the beans are well-cooked are completed with a third time period. In some embodiments, the third time period is set to be within a range from 15min to 40min. In some embodiments, an amount of the beans and the water in the predetermined proportion is determined, and the determining is implemented through any one of the following: measuring a weight of the beans and the water in the predetermined proportion; determining a lapsed time of heating the beans and the water in the predetermined proportion from room temperature to the first predetermined temperature; and receiving an indication on the amount of the beans and the water in the predetermined proportion via a user interface of the blender.

In some embodiments, the third time period is set based on the amount of the beans and the water in the predetermined proportion, wherein: if the amount is determined to be less than a predetermined threshold, the third time period is set to be within a first range in a set range of the third time period; and if the amount is determined to be greater than the predetermined threshold, the third time period is set to be within a second range in the set range; and wherein the first range is less than the second range.

In some embodiments, the grinding is performed at least one time, and wherein a total time of the grinding is set within a range from 2min to 15min. In some embodiments, the grinding is performed a plurality of times, and two consecutive times of the plurality of times of the grinding are separated by a predetermined interval. Performing the plurality of times of the grinding with the predetermined interval between the two consecutive times of the grindings, the beans within the blender can be thoroughly ground. In this way, a pleasant smooth taste can be obtained.

In some embodiments, the first predetermined temperature is set to a boiling point of the water, and the second predetermined temperature is set to be equal to or lower than the first predetermined temperature, and wherein a temperature difference between the first predetermined temperature and the second predetermined temperature is set within a range from 0°C to 5°C.

In some embodiments, the temperature difference between the first predetermined temperature and the second predetermined temperature is set within a range from 0.5°C to 2°C. In these embodiments, the heating and cooking are performed at the first predetermined temperature and the second predetermined temperature slightly lower than the first predetermined temperature, respectively. The beans being well-cooked (or substantially well-cooked) at the second predetermined temperature, which is slightly lower than the first predetermined temperature, further facilitates preventing soy milk from overflowing out of the blender.

In a second aspect, embodiments of the present disclosure provide a blender for preparing soy milk. The blender comprises: a base portion comprising a heating device; a receptacle for accommodating beans and water in a predetermined proportion and detachably attached to the base portion; a stirring device disposed within the receptacle; a temperature sensor disposed on the receptacle or the base portion and configured to sense a temperature of the beans and the water in the predetermined proportion; and a controller configured to: control the heating device to heat the beans and the water in the predetermined proportion to a first predetermined temperature; in response to the temperature sensor sensing that the beans and the water in the predetermined proportion are heated to the first predetermined temperature, control the heating device to cook the beans at a second predetermined temperature to make the beans are well-cooked; and control the stirring device to grind the well-cooked beans.

The blender according to embodiments of the present disclosure can perform the method of preparing soy milk according to any one of the preceding paragraphs, thereby achieving "a single device with multiple functions" as desired by users.

In some embodiments, heating the beans and the water in the predetermined proportion to the first predetermined temperature is completed within a first time period, and cooking the beans at the second predetermined temperature such that the beans are well-cooked is completed within a second time period, and wherein the second time period is set to be within a range from 10min to 30min.

In some embodiments, heating the beans and the water in the predetermined proportion to the first predetermined temperature and cooking the beans at the second predetermined temperature such that the beans are well-cooked are completed within a third time period, wherein the third time period is set to be within a range from 15min to 40min. The following illustration of example embodiments with reference to the drawings will make the features of the present disclosure more obvious.

It should be appreciated that this Summary is not intended to identify key features or essential features of embodiments of the present disclosure, nor is it intended to be used to limit the scope of the present disclosure. Other features of the present disclosure will be more obvious throughout the following description.

### BRIEF DESCRIPTION OF THE DRAWINGS

Throughout the following detailed description with reference to the accompanying drawings, the above and other objectives, features, and advantages of example embodiments of the present disclosure will become more apparent. Several example embodiments of the present disclosure will be illustrated by way of example but not limitation in the drawings in which:
Fig. 1 schematically illustrates different temperatures for heating different amounts of water and soybeans in a conventional soy milk preparation method;
Fig. 2 schematically illustrates a flowchart of a method of preparing soy milk according to embodiments of the present disclosure;
Fig. 3 schematically illustrates a flowchart of a method of preparing soy milk according to embodiments of the present disclosure; and
Fig. 4 schematically illustrates a blender according to embodiments of the present disclosure.

### DETAILED DESCRIPTION OF EMBODIMENTS

The conception of the present disclosure will now be described with reference to various example embodiments illustrated in the drawings. It should be appreciated that description of those embodiments is merely to enable those skilled in the art to better understand and further implement example embodiments disclosed herein and is not intended for limiting the scope disclosed herein in any manner. It is worth noting that the same or similar reference symbols, if possible, may be used in the drawings, and the same or similar reference symbols may refer to the same or similar elements. As would be appreciated by those skilled in the art, alternative embodiments of the structure and/or method disclosed herein can be envisioned from the following description, without departing from the principles and the conception as claimed herein.

In the context of the present disclosure, the term "includes" and its variants are to be read as open-ended terms that mean "includes, but is not limited to;" the term "based on" is to be read as "based at least in part on;" the term "an embodiment" is to be read as "at least one example embodiment;" and the term "another embodiment" is to be read as "at least one other embodiment." Other terms probably included but not mentioned herein should not be read or defined in a way contrary to the conception the basis of the embodiments of the present disclosure, unless the context clearly indicates otherwise.

In the context of the present disclosure, an object to be prepared may be generally referred to as "beans." In the embodiments, "soybeans" may be the object for illustrative purposes. However, in addition to the soybeans, the object to be prepared may include various beans such as red beans, mung beans, black beans, kidney beans, and the like, and a mixture of one or more types of the above beans and one or more types of vegetable, fruit, and cereals.

In the context of the present disclosure, a liquid for cooking (for example, boiling) the beans to be prepared may be water, mineral water, tap water, alkaline water, saline solution, alcohol, or any combination of these solvents. Therefore, "water" mentioned for the purpose of description should not only be read as water in the ordinary sense, but may include various liquids suitable for cooking beans, or may refer to water in the ordinary sense.

In the context of the present disclosure, "blender" may refer to a cooking apparatus with a stirring device, such as a high speed blender and the like. The blender as mentioned in the embodiments of the present disclosure is not intended to be confined to a specific type of cooking apparatus. Any cooking apparatus comprising cooking and grinding functions is applicable according to embodiments of the present disclosure.

As aforementioned, a soy milk machine is typically provided with an overflow sensor or a liquid level sensor for sensing a boiling state of soy milk being cooked within a cooking chamber of the soy milk machine. Therefore, in response to the sensed state, the soy milk maker can adjust, for example, a heating power, to avoid overflow of the soy milk. Unlike the soy milk machine, a blender is not provided with an overflow sensor. In the case of using a blender to prepare the soy milk, users must be careful about soy milk overflowing.

In conventional soy milk preparation methods, cooking and grinding are usually performed alternately during the preparation of the soy milk. The beans are ground before being well-cooked, for example, immediately after they are fed into the blender. In subsequent cooking processes, the roughly ground beans will be heated while continuing to be ground more than one time.

This conventional method of preparing soy milk is generally referred to as a hot-water grinding preparation method. In this method, grinding and heating are performed alternately throughout the soy milk preparation. There are some problems as detailed below when this conventional method is employed to prepare soy milk.

One problem is associated with the soy milk overflowing.

The blender is vulnerable to the soy milk overflowing, due to absence of the overflow sensor, which is usually a necessary component of the soy milk maker. Particularly in the case where users add water and beans in an amount which exceeds an upper limit of the blender capacity, the soy milk overflowing will become worse.

Another problem is associated with a reduction of the nutritive value of the soy milk.

Legume food such as soybeans contains many anti-nutrients such as trypsin inhibitor, lectin, toxin compounds, and the like. These anti-nutrients can be inactivated efficiently only by being well-cooked at a high temperature, for example, 100°C, for about 20 to 30min.

In the soy milk preparation, a "fake boiling" state may occur. The fake boiling state mainly results from saponin released from beans which are heated above 80°C. The fake boiling phenomenon will become worse when users add excessive water and beans into the blender.

"Fake boiling" of the raw soy milk is related to anti-nutrients contained therein. The fake boiling phenomenon, as can be observed when the soy milk is heated to 80°C to 90°C, is caused by massive foam generated due to expansion of these anti-nutrients upon heating. If the anti-nutrients are not completely inactivated, it will affect the digestion and absorption of a human, which may cause syndromes such as nausea, vomiting, stomach ache, diarrhea and the like, or even worse, threaten the user's life.

Since the soy milk overflowing must be avoided in the hot-water grinding preparation method, the blender performing this method has to lower the heating power or temperature frequently to prevent the soy milk from overflowing out of the blender. As a result, the blender is incapable of keeping the ingredients to be cooked (*i*.*e*., food including beans and water) at a relatively high temperature for a long time. When the blender is used to carry out the hot-water grinding preparation method to make soy milk, there may be the problem that the anti-nutrients are not inactivated or destroyed completely.

In particular, in a case where too many or too few ingredients are fed into the cooking chamber of the blender, the problem, which is associated with the anti-nutrient inactivation caused by the failure of keeping the ingredients at the relatively high temperature for a long time, would become worse.

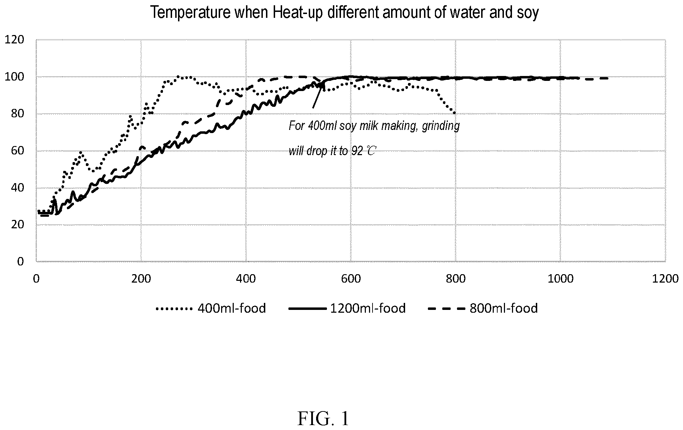

For example, Fig. 1 illustrates a case where a relatively small amount of the ingredients are fed into the cooking chamber of the blender. In this case, for example, 400ml water and 40g soybeans are fed into the cooking chamber of the blender for preparing soy milk. As can be seen from Fig. 1, in the case of preparing soy milk about 400ml, grinding the soybeans may cause the temperature of the soy milk to drop to 92°C. At 92°C, which is a relatively low cooking temperature, the anti-nutrients cannot be inactivated or destroyed efficiently.

That is, the temperature would drop in a case where a small quantity of the ingredients is added into the blender. This is caused by a mixture of cold air into the ingredients in the cooking process. Specifically, in a case where there is a small amount of the ingredients (e.g., a small total amount of beans and water) in the cooking chamber of the blender, for example, less than one third of the volume of the cooking chamber, a large volume of cold air fills the cooking chamber. In addition, grinding preformed throughout the cooking process may also cause the temperature of the ingredients to be reduced to about 90°C, because heating would be stopped when grinding is carried out. As a result, the anti-nutrients in the legume food cannot be inactivated or destroyed efficiently, negatively affecting the user's health.

Referring to Table 1 where a required temperature and time for inactivating or destroying representative anti-nutrients in soybeans are listed. The data in Table 1 are provided merely for illustration without suggesting any limitation.

**Table 1 Temperature and Time Required for Inactivation of Anti-nutrients in Soybeans**

| Anti-nutrients | Temperature and time required for inactivation |
|---|---|
| Trypsin inhibitor | 90% inactivation can be achieved by boiling for 20 to 30min. |
| Soybean lectin | 100% inactivation can be achieved by boiling for 20min. |
| Ureases | 100% inactivation can be achieved by boiling for 2min or 3min. |
| Lipoxygenase activity (odorless, for example, off-bean-smell) | Inactivation can be achieved only when the temperature is above 80°C before contact with lipids, otherwise, generation of beany volatile compounds cannot be avoided. |

From the data in Table 1, it can be seen that multiple anti-nutrients contained in soybeans can be inactivated efficiently only after the soy milk has been boiled for a period of time (for example, longer than 20min) at a high temperature (for example, about 100°C). Boiling for a short time cannot meet the above requirement. Further, boiling at a low temperature (for example, about 92°C) should last for a longer time, but the longer boiling time may worsen the problem of the soy milk overflowing in turn.

In addition, in a case where the beans have been ground, the nutrients in the beans are released into the liquid (for example, the water) for cooking beans. As such, the chance of destroying nutrients of the beans by heat, oxygen, active enzymes and the like is increased. Unsatisfactorily, the nutritional value of the prepared soy milk is reduced. In other words, in order to inactivate efficiently the anti-nutrients in the legume, it is required that boiling is performed at a high temperature for a long time. However, for the legume food which is ground before the end of cooking, a longer heating time indicates a greater loss of beneficial nutrients to be absorbed by the human body.

As discussed above, in the conventional hot-water grinding preparation method, the cooking condition for inactivating anti-nutrients contradicts the cooking condition for preserving beneficial nutrients.

In order to solve the above problems in the hot-water grinding preparation method, embodiments of the present disclosure provide a method of preparing soy milk. In general, in the method of preparing soy milk according to embodiments of the present disclosure, the beans (often dried) are well-cooked (or substantially well-cooked) in a cooking stage, and then the well-cooked beans are ground in a grinding stage.

It is important that the beans to be well-cooked in the cooking stage by the method according to embodiments of the present invention are kept in an intact form. The "intact form" may refer to each of the beans is a complete or whole bean (probably including a few of half beans). To sum up, in the cooking stage, the beans have not been ground into granules or particles. The beans being kept in the intact form throughout the cooking stage at least ensures that nutrients in the beans would not be destroyed or reduced caused by premature release of the nutrients into the cooking liquid.

In the context of the present disclosure, "well-cooked" may include thoroughly cooked and substantially cooked. The "substantially cooked" at least indicates that the beans are cooked (for example, boiled) to such an extent that they are not harmless to human health. In brief, it is important in the method of preparing soy milk according to embodiments of the present disclosure that the cooking is performed first, and after this, the grinding is applied to the well-cooked beans. Compared to the conventional hot-water grinding preparation method, the beans prepared by the method according to embodiments of the present disclosure are not ground in the cooking stage.

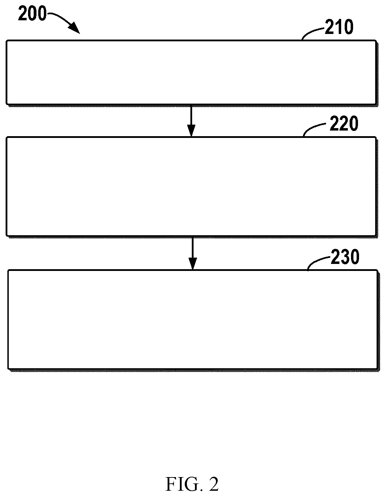

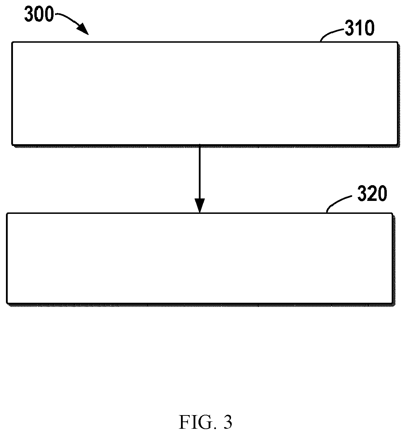

Reference will be made now to Figs. 2 and 3 to describe the method of preparing soy milk according to embodiments of the present disclosure.

Fig. 2 illustrates a flowchart of a method 200 of preparing soy milk according to embodiments of the present disclosure. At block 210, the beans and the water in a predetermined proportion (for example, 1:10) within the cooking chamber of the blender are heated to a first predetermined temperature. Then, at block 220, the beans are well-cooked at a second predetermined temperature until the beans are well cooked. In the end, at block 230, the well-cooked beans are ground.

In some embodiments, the "first predetermined temperature" may refer to a boiling point of a liquid for cooking (*i*.*e*., boiling in this case) the beans. For example, when water is used as the liquid for cooking beans, the first predetermined temperature may be set to 100°C.

In some embodiments, the heating performed at block 210 is completed in a first time period, and the cooking performed at block 220 is completed in a second time period.

In these embodiments, heating the beans and the water in the predetermined proportion may be monitored by, for example, a temperature sensor of the blender. The duration of the first time period may not be associated with a total amount of the beans and water. It is unnecessary for the blender to time a lapsed time of reaching the first predetermined temperature. As long as the blender (for example, the temperature sensor of the blender) determines that a liquid temperature in the cooking chamber or ambient temperature of the cooking chamber has reached the first predetermined temperature, the blender will perform the cooking at block 220 in response to the determination.

The blender performs the cooking at block 220 within the second time period. The blender starts timing at the beginning of the cooking until the beans are well-cooked. In some embodiments, the second time period may be set within a relatively long time range, for example, within a range of 10min to 30min.

In some embodiments, the second time period may be varied depending on types of the ingredients within the cooking chamber of the blender. The types of the ingredients may be associated with for example bean types, liquid types, presence of other types of ingredients (for example, rice, sticky rice, and the like) or not, a proportion of beans to the liquid, and the like.

According to embodiments of the present disclosure, the second time period can be set to be within a relatively long time range to efficiently inactivate or destroy the anti-nutrients contained in the beans. In addition, it is important at block 220 to cook (for example, boil) the beans at the second predetermined temperature for a relatively long time.

The "second predetermined temperature" is set to be slightly lower than the first predetermined temperature. In some embodiments, a temperature difference between the first predetermined temperature and the second predetermined temperature may be set to be within a range of 0°C to 5°C. In some other embodiments, the temperature difference between the first predetermined temperature and the second predetermined temperature may be set to be within a range of 0.5°C to 2°C. For example, in a case where the water is used as the liquid for cooking (in this case for boiling), the first predetermined temperature can be set to the boiling point of the water, namely 100°C. In this case, the second predetermined temperature can be set, for example, to 98°C, accordingly.

According to embodiments of the present disclosure, by setting the second predetermined temperature to be slightly lower than the first predetermined temperature, fluctuations of the liquid resulting from the "fake boiling" of the legume food in the cooking process can be mitigated. As described above, the anti-nutrients contained in the legume food will generate foam in a boiling process, and these foams are likely to cause the boiling liquid to be fluctuated or even drastically fluctuated. The fake boiling of the legume food may mislead users into believing that the prepared food has been boiled. By setting the second predetermined temperature to be slightly lower than the first predetermined temperature, for example, slightly lower than the boiling point of water 100°C, the "fake boiling" of the legume food can be efficiently eliminated.

In some embodiments, the well-cooked beans are ground more than one time at block 230. A time period for the grinding may be set, for example, to be between 2min and 15min. In some other embodiments, the time period for the grinding may be set, for example, to be between 4min and 10min.

The time period for the grinding may be varied for different conditions. For example, if the user desires the soy milk with a delicate taste, the time period for the grinding may be set or selected to be relatively long, for example, about 5min, about 8min, about 10min, or the like. If the user does not care about the delicate taste of the soy milk, a short time period for the grinding (for example, about 2min) will be applicable. For example, in a case where a small amount of the cooking liquid is added to the cooking chamber of the blender, the time period for the grinding may be set relatively short. For another example, the time period for the grinding may be varied depending on a rotation speed of the grinding or stirring device of the blender and/or sharpness of a grinding blade of the grinding or stirring device, etc.

Compared with the hot-water grinding preparation method mentioned above, in the method according to the embodiments of the present disclosure, the required time period for the grinding may be set to be relatively short, and a required force for the grinding may be set to be relatively small. This is because, in the method according to the embodiments of the present disclosure, the grinding is applied to well-cooked beans, rather than dried or raw beans. The well-cooked beans have hardness significantly smaller than that of the dried or raw beans which are not cooked yet.

As such, a motor for supplying power to the stirring device of the blender for performing the grinding can beneficially have a prolonged service life. Moreover, since the grinding is performed only at the final stage of the soy milk preparation, the users do not have to endure noise for a long period of time, which would otherwise annoy the users throughout the soy milk preparation in the hot-water grinding preparation method.

In some embodiments, the well-cooked beans are ground a plurality of times at block 230, and two consecutive times of the plurality of times of the grinding are separated by a predetermined interval. For example, the predetermined interval may be set to be within a range of about 5sec to 15sec, such as 10sec. Within the predetermined interval between the two consecutive times of grinding, the beans or dregs (for example, granules or particles of the beans) floating to an upper portion of the cooking chamber, for example, due to heat generated during the cooking or a centrifugal force generated by the grinding, re-sink to a lower or bottom portion of the cooking chamber.

Generally, in the cooking process, the dried or raw beans will absorb water in an amount, for example, about 50% to 100% of their weights. For example, in a case where the beans are well-cooked, the size of the cooked beans would be expanded due to water absorption to a size two times larger than the size of the dried or raw beans. The water-absorbed beans have a density larger than the liquid for cooking. Therefore, in a time gap between the consecutive times of grinding, i.e., an end of a preceding grinding and a starting of a next grinding, the beans will re-sink to the lower portion or the bottom of the cooking chamber of the blender.

The stirring device (or the grinding device) of the blender is typically disposed at the lower portion or the bottom of the cooking chamber of the blender. As a result, the time gap between the consecutive times of grinding can enable the beans, which re-sink to the lower portion or the bottom of the cooking chamber and have not been ground yet, to be ground with the blades of the stirring device. After being ground the plurality of times, for example, twice, three times or more, the beans within the cooking chamber would be completely ground, for example, into almost invisible granules or particles.

In the grinding stage, the nutrients contained in the beans which are preserved in the cooking stage can be sufficiently released into the cooking liquid. In this way, the prepared soy milk can provide the users with the nutrients of the soy milk as much as possible.

In addition, the preparation of the soy milk with a soy milk machine typically comprises a filtering of the soy milk. That is, the prepared soy milk would be filtered to remove solid particles (the dregs, for example) contained therein. However, the method 200 of preparing soy milk according to embodiments of the present disclosure can omit the filtering for the prepared soy milk.

This can be a benefit from the grinding force of the stirring device of the blender, which is typically greater than that of the soy milk maker. In this way, the soy milk prepared according to embodiments of the present disclosure contains almost no solid particles. Due to the omission of the filtering of the soy milk, it is required that the prepared soy milk be well-cooked so as to enable complete inactivation of the anti-nutrients in the soy milk.

Fig. 3 illustrates a flowchart of a method 300 of preparing soy milk according to embodiments of the present disclosure. The description as illustrated in the method 200, for example, the description regarding the first predetermined temperature and the second predetermined temperature, will not be repeated in the description of the method 300.

Referring to Fig. 3, at block 310, the beans and water in the predetermined proportion (for example, 1:10) in the cooking chamber of the blender are heated to the first predetermined temperature, and the beans are boiled at the second predetermined temperature until they are well-cooked. Then, at block 320, the well cooked beans are ground.

For the analogous reasons as explained in embodiments of the method 200, the "second predetermined temperature" in the method 300 is also set to be slightly lower than the first predetermined temperature. The specific temperatures and the range of the temperature difference are identical to those as depicted in those embodiments as illustrated by Fig. 2, which are not repeated herein.

Furthermore, for the analogous reasons as explained in embodiments about the method 200, the grinding performed in the method 300 may also be performed at least one time. In some embodiments, the grinding performed in the method 300 may also be performed a plurality of times. In a case where the grinding is performed the plurality of times, two consecutive times of the plurality of times of the grinding are also separated by a predetermined interval. The description about the predetermined interval as explained in embodiments about the method 200 can be applied to embodiments about the method 300, which are not repeated herein.

The method 300 is substantially the same as the method 200, except for slight differences in the cooking stage. The same contents shared by the methods 200 and 300 are nor repeated herein.

The method as shown in Fig. 3 may be regarded as a "fast cooking" mode. In the method 300, the ingredients are heated to the first predetermined temperature and boiled at the second predetermined temperature until they are well cooked. This heating and boiling process may be implemented as a whole within a third time period and may be timed collectively as a whole.

As aforementioned, in the method 200, it is unnecessary for the blender to time the heating time period during which the first predetermined temperature is reached. As long as the blender, for example, the temperature sensor of the blender, determines that the ambient temperature of the cooking chamber of the blender or the temperature of the heated ingredients has reached the first predetermined temperature, the ingredients can be well-cooked at the second predetermined temperature.

Unlike the method 200, the blender used in the method 300 may time a heating time period during which the first predetermined temperature is reached and a cooking (*i.e.*, boiling) time period required at the second predetermined temperature as a whole. In other words, from the moment when the ingredients (for example, the beans and water mixed in a predetermined proportion) are fed into the cooking chamber and heated by a heating device of the blender, the blender starts timing. Then, the blender stops timing at the moment when the ingredients are well cooked. Generally, for the ingredients to be cooking which are identical in terms of types, weight, proportion and the like, the cooking time period required according to the method 300 may be less than that required according to the method 200. Therefore, the method 300 may be considered as the "fast cooking" mode.

The duration from the start of the timing to the stop of the timing can be regarded as a third time period. In some embodiments, the third time period may be set to be within, for example, a range of about 15min to 40min. In some other embodiments, the third time period may be set to be within, for example, a range of about 20min to 25min. In some embodiments, the method 300 may further comprise determining an amount of the ingredients to be boiled (for example, a total amount of the beans and the cooking liquid, such as a total amount of the soybeans and the water) in the cooking chamber of the blender. Moreover, the third time period may be set based on the determined amount of the ingredients. The "amount of ingredients" herein refers to a volume of the ingredients, namely a total volume of the beans and the cooking liquid mixed in the predetermined proportion.

According to embodiments of the present disclosure, the determined amount of the ingredients may be classified as a small amount and a large amount. The small amount may refer to, for example, that the total amount of the beans and the cooking liquid meets a lower limit (for example, about 300ml) of the capacity of the blender, or falls within an acceptable range based on the lower limit. The large amount may refer to, for example, that the total amount of the beans and the cooking liquid meets an upper limit (for example, about 1700ml) of the capacity of the blender, or falls within an acceptable range based on the upper limit.

In some embodiments, the total amount of the beans and the cooking liquid may be determined by measuring a weight of the beans and the cooking liquid. In the case, the blender may include, for example, a weight sensor for directly sensing the weight of the beans and the cooking liquid in the cooking chamber of the blender. Subsequently, the sensed weight can be converted to the total amount (*i.e.*, the total volume) of the beans and the cooking liquid.

In some other embodiments, the total amount of the beans and the cooking liquid may be determined by determining a heating time period for heating the beans and the cooking liquid from the room temperature to the first predetermined temperature. Based on the determined heating time period, the blender can determine the total amount (*i.e.*, the total volume) of the beans and the cooking liquid in the cooking chamber.

In some further embodiments, the total amount of the beans and the cooking liquid may be input directly via a user interface of the blender. For example, the user may select a numerical value corresponding to the total amount of the beans and the cooking liquid via buttons on an operation panel of the blender.

In addition to the above description, any technical means adapted to aid the blender in determining the total amount of the beans and the cooking liquid may be employed according to embodiments of the present disclosure.

In a case where the small amount of the ingredients are provided (for example, the total volume of the beans and the cooking liquid is about 440ml), the beans and the cooking liquid can be heated quickly to the first predetermined temperature. In a case where the large amount of the ingredients are provided (for example, the total volume of the beans and the cooking liquid is about 1740), it takes a longer time than that required for the small amount to heat the beans and the cooking liquid to the first predetermined temperature. In this way, the third time period involved in the method 300 may be set based on the determined total amount of the beans and the cooking liquid.

For example, a predetermined threshold, for example, 800ml, may be set for the total amount of the beans and the cooking liquid. If the determined total amount of the beans and the cooking liquid is for example about 440ml, *i.e.*, less than the predetermined threshold, 800ml, then the third time period can be set to be within a small time range. For example, the third time period in this case may be set to be within a range of 20min to 35min.

If the determined total amount of the beans and the cooking liquid is for example 1740ml, which is greater than the predetermined threshold (800ml), then the third time period can be set to be within a large time range. For example, the third time period in this case may be set to be within a range of 15min to 35min.

Those values and ranges which are mentioned above and will be stated below are provided merely for illustration purpose, without any intention of confining the embodiments of the present disclosure to specific circumstances by using those specific numerical values. Any reasonable values and ranges can be applicable according to embodiments of the present disclosure.

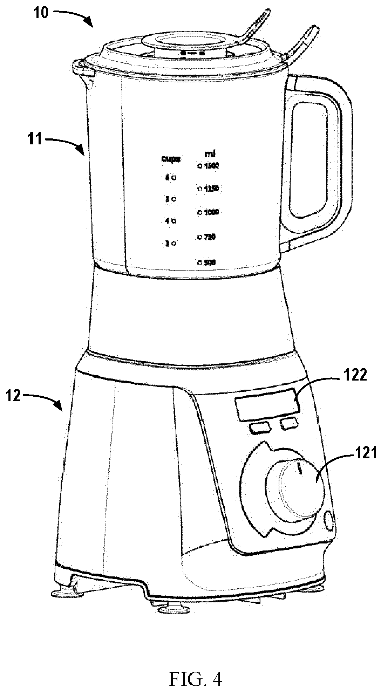

The method of preparing soy milk according to embodiments of the present disclosure has been described above. Reference will now be made to Fig. 4 to describe an example blender for implementing the above method according to embodiments of the present disclosure. As aforementioned, the "blender" used in the context of the present disclosure may be any appropriate cooking apparatus that can perform the cooking and the grinding of the method according to the embodiments of the present disclosure.

Fig. 4 illustrates an example blender 10. The blender comprises a base portion 12 in which a heating device is disposed. The blender 10 also comprises a receptacle 11 having the cooking chamber for accommodating the beans and the cooking liquid (for example, the soybeans and the water) in the predetermined proportion. In some embodiments, the receptacle 11 can be detachably attached to the base portion 12 so as to allow the receptacle 11 to be separated from the base portion 12 for cleaning, for example.

The blender 10 also comprises the stirring device or the grinding device (not shown). The stirring device can be typically disposed within the receptacle 11 and provided with a cutter with blades, for example. The blades of the cutter of the stirring device are typically disposed at the lower portion or the bottom of the receptacle 11.

The blender 10 further comprises the temperature sensor (not shown). The temperature sensor may be disposed on the receptacle 11 or the base portion 12 and configured to sense the ambient temperature within the receptacle 11 or the temperature of the ingredients to be prepared.

In addition, the blender 10 comprises a controller. The controller is typically configured to control the heating device to heat the beans and the cooking liquid mixed in the predetermined proportion to the first predetermined temperature; in response to the temperature sensor determining that the beans and the cooking liquid has been heated to the first predetermined temperature, control the heating device to cook (for example, boil) the beans at the second predetermined temperature until the beans are well cooked; and control the stirring device to grind the well-cooked beans.

The contents about the first predetermined temperature, the second predetermined temperature, the grinding and the like are illustrated in embodiments of the methods 200 and 300.

In some embodiments, the blender 10 may also include a user interface, for example, a display 122 and a knob 121 as shown in Fig. 4. For example, the user may input directly an amount of respective ingredients into the controller of the blender via the knob 121.

For some other embodiments, the user may learn intuitively a current operation state of the blender 10 via digits, words, symbols and the like displayed on the display 122.

The specific structure, configuration and the like of the blender are not the focus of embodiments of the present disclosure. As described clearly above, the "blender" used herein may be any appropriate cooking apparatus that can perform the cooking and the grinding of the method according to the embodiments of the present disclosure.

A set of experiments were carried out for the blender with a conventional configuration (*i.e.*, for performing the hot-water grinding preparation method) and the blender configured to perform the method according to the embodiments of the present disclosure. The results of the experiments are listed in Tables 2 and 3.

**Table 2**

| | |
|---|---|
| Soybeans (dried) | 160g |
| Water | 1600ml |
| Total amount | 1760ml (exceeding the upper limit of cold-water boiling) |
| Blender 1 (with the conventional configuration) | Feeding 160g dried soy beans and 1600ml water into the boiling chamber of the blender 1, and entering the boiling mode in which heating and grinding are performed alternately. |
| Blender 2 (configured to perform the method in Fig. 3) | Mode 1: feeding 160g dried soybeans and 1600ml water into the boiling chamber of the blender 2, and entering the boiling mode in which the boiling lasts for 20min at a temperature of 100°C. Then, stopping the heating, and entering the grinding stage in which the grinding is performed four times and each grinding lasts for 2min. |
| | Mode 2: feeding 160g dried soybeans and 1600ml water into the boiling chamber of the blender 2, and entering the boiling stage in which the cooling lasts for 25min at a temperature of 100°C. Then stopping the heating, and entering the grinding stage in which the grinding is performed four times and each grinding lasts for 2min. |

**Table 3**

| | Experiment results |
|---|---|
| Blender 1 | When the boiling lasts for about 11min, the soy milk overflows from the blender 1. |
| Blender 2 | Mode 1: no soy milk overflowing occurs. The prepared soy milk has a smooth texture, and particles are too fine to be sensed. |
| | Mode 2: no soy milk overflowing occurs. The prepared soy milk has a smooth texture, and particles are too fine to be sensed. Compared to the soy milk prepared with Mode 1, the prepared soy milk is much thicker. |

Compared with the conventional method of preparing soy milk (for example, the hot-water grinding preparation method), the method of preparing soy milk using the blender according to embodiments of the present disclosure can bring about more advantageous effects. It should be appreciated that the advantageous effects as mentioned below may not cover all possibilities.

In the preparation method according to the embodiments of the present disclosure, the beans are cooked (for example boiled) in the intact form. Consequently, the fake boiling resulting from the anti-nutrients contained in the beans can be mitigated, and more nutrients can be preserved (because it is unnecessary to grind the beans before being well-cooked, and the nutrients would not be released prematurely into the cooking liquid). In addition, the beans in the intact form are cooked at a relatively high temperature for a long time, and thus the anti-nutrients can be inactivated efficiently. In this way, digestibility of the proteins contained in the legume food is increased. Furthermore, the soy milk prepared with the method according to the embodiments of the present disclosure can enable more proteins and starch to be bound together. Thus, starch digestion can be slowed, which is beneficial to weight management for users.

Although some embodiments of the present disclosure are illustrated through examples, those skilled in the art would appreciate that the above examples are provided merely for illustration, rather than suggesting any limitation to the scope of the present disclosure. It would also be understood that modifications to those embodiments without departing from the scope and spirits of the present disclosure are allowed. The scope of the present disclosure is defined by the appended claims.

In the specification and the following claims, unless the context clearly indicates otherwise, the terms "include" and "comprise" are to be read as including components or constituents as illustrated but not excluding any other components or constituents.

Any prior art cited herein is not and should not be considered as admitting or implying that the prior art constitutes the common knowledge.

It would be appreciated that the appended claims are temporary claims, which are provided as an example of possible claims, without any intention to confine the scope of the claims to any future patent application that is based on the present application. It is possible to add/delete a component or components into/from the example claims in the future, to further define or redefine the present disclosure.

## Claims

1. A method of preparing soy milk using a blender, comprising:
heating beans and water in a predetermined proportion to a first predetermined temperature;
cooking the beans at a second predetermined temperature to make the beans well-cooked; and
grinding the well-cooked beans.

2. The method of claim 1, wherein:
heating the beans and the water in the predetermined proportion to the first predetermined temperature is completed within a first time period; and
cooking the beans at the second predetermined temperature to make the beans well-cooked is completed within a second time period.

3. The method of claim 2, wherein:
the second time period is set to be within a range from 10min to 30min.

4. The method of any of claims 1-3, wherein:
heating the beans and the water in the predetermined proportion to the first predetermined temperature and cooking the beans at the second predetermined temperature to make the beans well-cooked is completed within a third time period.

5. The method of claim 4, wherein the third time period is set to be within a range from 15min to 40min.

6. The method of any of claims 1-5, further comprising:
determining an amount of the beans and the water in the predetermined proportion, the determining is implemented by means of any one of the following:
measuring a weight of the beans and the water in the predetermined proportion;
determining a lapsed time of heating the beans and the water in the predetermined proportion from room temperature to the first predetermined temperature; and
receiving an indication on the amount of the beans and the water in the predetermined proportion via a user interface of the blender.

7. The method of any of claims 4-6, wherein the third time period is set based on the amount of the beans and the water in the predetermined proportion, wherein:
if the amount is determined to be less than a predetermined threshold, the third time period is set within a first range in a set range of the third time period; and
if the amount is determined to be greater than the predetermined threshold, the third time period is set within a second range in the set range; and
wherein the first range is less than the second range.

8. The method of any of claims 1-7, wherein the grinding is performed at least one time, and wherein a total time of the grinding is set to be within a range from 2min to 15min.

9. The method of claim 8, wherein the total time of the grinding is set to be within a range from 4min to 10min.

10. The method of any of claims 1-9, wherein the grinding is performed a plurality of times, and two consecutive times of the plurality of times of the grinding are separated by a predetermined interval.

11. The method of any of claims 1-10, wherein the first predetermined temperature is set to a boiling point of the water, and the second predetermined temperature is set to be equal to or lower than the first predetermined temperature.

12. The method of any of claims 1-11, wherein a temperature difference between the first predetermined temperature and the second predetermined temperature is set to be within a range from 0°C to 5°C, more preferably within a range from 0.5°C to 2°C.

13. A blender for preparing soy milk, comprising:
a base portion (12) comprising a heating device;
a receptacle (11) for accommodating beans and water in a predetermined proportion, the receptacle detachably attached to the base portion (12);
a stirring device disposed within the receptacle (11);
a temperature sensor disposed on the receptacle (11) or the base portion (12) and configured to sense a temperature of the beans and the water in the predetermined proportion; and
a controller configured to:
control the heating device to heat the beans and the water in the predetermined proportion to a first predetermined temperature;
in response to the temperature sensor sensing that the beans and the water in the predetermined proportion are heated to the first predetermined temperature, control the heating device to cook the beans at a second predetermined temperature to make the beans well-cooked; and
control the stirring device to grind the well-cooked beans.

14. The blender of claim 13, wherein heating the beans and the water in the predetermined proportion to the first predetermined temperature is completed within a first time period, and cooking the beans at the second predetermined temperature to make the beans well-cooked is completed within a second time period, and wherein the second time period is set to be within a range from 10min to 30min.

15. The blender of claim 13 or 14, wherein heating the beans and the water in the predetermined proportion to the first predetermined temperature, and cooking the beans at the second predetermined temperature to make the beans well-cooked are completed within a third time period, wherein the third time period is set to be within a range from 15min to 40min.
